Europäisches Patentamt

European Patent Office

Office européen des brevets

(11) Veröffentlichungsnummer: **0 232 713 B1**

(12) **EUROPÄISCHE PATENTSCHRIFT**

(45) Veröffentlichungstag der Patentschrift: **08.04.92**

(51) Int. Cl.⁵: **F16K 24/04**

(21) Anmeldenummer: **87100177.2**

(22) Anmeldetag: **09.01.87**

(54) **Entlüftungsautomat für flüssigkeitsgefüllte Systeme.**

(30) Priorität: **11.01.86 CH 60/86**

(43) Veröffentlichungstag der Anmeldung:
**19.08.87 Patentblatt 87/34**

(45) Bekanntmachung des Hinweises auf die
Patenterteilung:
**08.04.92 Patentblatt 92/15**

(84) Benannte Vertragsstaaten:
**AT BE DE ES FR GB IT NL SE**

(56) Entgegenhaltungen:
**AT-B- 309 738**
**DE-U- 6 901 371**
**FR-A- 1 488 411**
**US-A- 2 908 282**

(73) Patentinhaber: **Lacrex S.A.**
**Via Eco 53**
**CH-6644 Orselina / TI(CH)**

(72) Erfinder: **Pasbrig, Max**
**Via Eco 53**
**CH-6644 Orselina(CH)**

(74) Vertreter: **Büchel, Kurt F., Dr.**
**Bergstrasse 297**
**FL-9495 Triesen(LI)**

Rank Xerox (UK) Business Services

**Beschreibung**

Die Erfindung betrifft einen Entlüftungsautomaten für flüssigkeitsgefüllte Systeme gemäss dem Oberbegriff des Anspruches 1.

Bei einem Entlüftungsautomaten (DE-PS 19 35 899) ist ein Luftkompressionsraum vorgesehen in dem ein Stufenkolben die komprimierte Luft durch eine Austrittsöffnung aussteuert, die durch kleine Luftauslassöffnungen einer Schutzkappe austritt. Befindet sich aber keine Luft in der Anlage, ist der Kompressionsraum mit Flüssigkeit gefüllt die statt Luft heim Druckanstieg vom Kolben durch die kleinen Luftaustrittsöffnungen ins Freie gedrückt wird, was infolge von Staubablagerungen in diesen zur Verstopfung führt. Ausserdem ist die Funktionsfähigkeit dieses Ventiles von mehreren Dichtungen am Kolben abhängig, die mit diesem in Führungen hin- und herbewegt werden. Durch kleine Fremdkörper werden diese beschädigt und der Kolben verklemmt, was zur Funktionsunfähigkeit führen kann. Bei einem in der DE-U-6901371 beschriebenen Entlüftungsventil entsprechend dem Oberbegriff von Anspruch 1 mit einem Kolben ist der Luftaustrittsstutzen am Oberteil so ausgebildet und ungeschützt angeordnet, dass Staub und Fremdkörper ungehindert direkt in das Ventil gelangen können und auf Grund einer Absetzung oder Korrosion am Kolben kleben bleiben und die Funktion beeinträchtigen. Es sind auch noch andere Entlüftungsautomaten bekannt, bei denen Kolben mit schraubenförmigen Windungen versehen sind und im übrigen eng in Bohrungen geführt werden. Auch bei diesen wird die Funktion beeinträchtigt, wenn kleine Fremdkörper, die sich in den Windungen absetzen, eine Verklemmung des Kolbens bewirken.

Mit dem Aufsetzen von Schutzkappen wurde versucht, diesem Missstand abzuhelfen. Jedoch wurde gleichzeitig damit die automatische Entlüftung behindert, so dass aus dem Stand der Technik Schutzkappen für manuell betätigbare Ventile bekannt wurden, die zur Entlüftung manuell entfernt bzw. gelockert werden müssen.

Der Erfindung liegt daher die Aufgabe zugrunde, einen Entlüftungsautomaten der genannten Art so zu verbessern, dass mit konstruktiv einfachen Mitteln eine stets einwandfreie, automatische Entlüftung gewährleistet ist.

Diese Aufgabe wird gemäss der Erfindung durch einen Entlüftungsautomaten der eingangs genannten Art mit den kennzeichnenden Merkmalen des Anspruches 1 gelöst. Besondere Ausführungsarten der Erfindung sind in den abhängigen Patentansprüchen beansprucht.

Der erfindungsgemässe Entlüftungsautomat ist in jeder Stellung funktionsfähig. Der bewegliche Kolben bewirkt selbstätig das Öffnen und Schliessen des Entlüftungskanals. Beim Öffnen kann im Flüssigkeitssystem befindliche Luft durch den zwischen Kolben und Bohrungswandung entsprechend der Viskosität der Flüssigkeit dimensionierten Spalt durch die Entlüftungsöffnungen ins Freie entweichen. Sobald die Flüssigkeitssäule den Kolben erreicht, baut sich infolge des Staues am Spalt ein Druck auf, der den Kolben nach oben schiebt, bis dieser den weiteren Luftaustritt abschliesst und damit weiter das Austreten von Flüssigkeit ausschliesst. Bei Druckabfall fällt der Kolben infolge seines Eigengewichtes nach unten und gibt den vorher verschlossenen Entlüftungskanal wieder frei. Durch mehrere radial zum Entlüftungskanal angeordnete Luftaustrittsöffnungen, die in Seiten eines Vielkants münden und von einer Schutzkappe überdeckt sind, wird der Entlüftungsautomat vor dem Eindringen von Schmutz und Fremdkörpern geschützt, wobei die Luft jederzeit durch den Freiraum, der zwischen den Seitenflächen des Vielkants und der Innenwandung der Schutzkappe besteht, entweichen kann.

In den Zeichnungen ist ein Ausführungsbeispiel der Errindung dargestellt. Es zeigen:

Fig. 1 einen Längsschnitt durch einen erfindungsgemässen Entlüftungsautomaten;und

Fig.2 eine Darstellung eines Details des Entlüftungsautomaten.

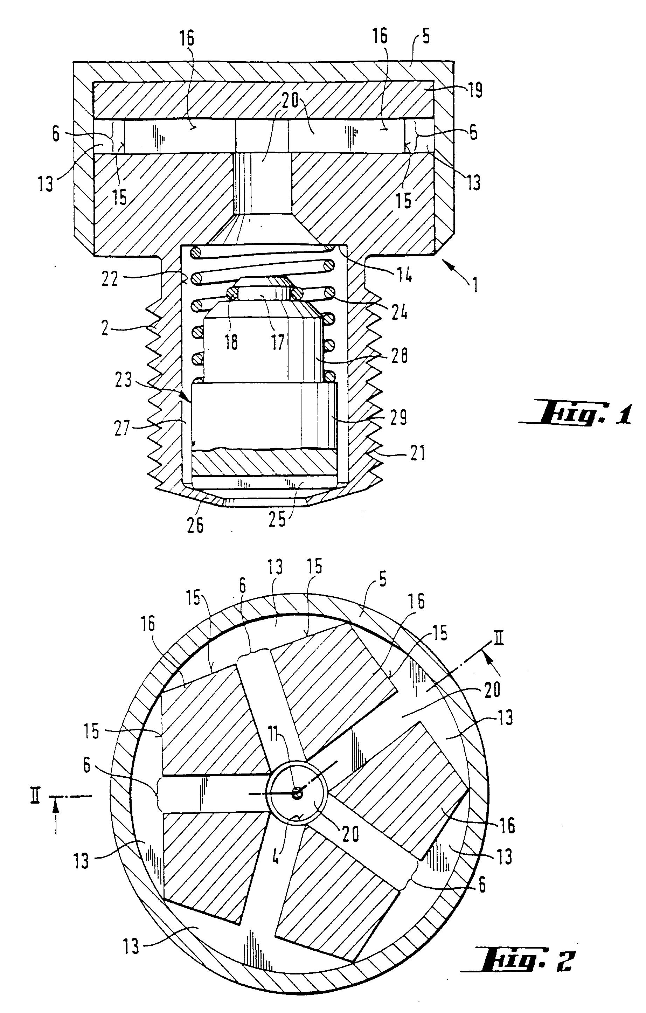

Ein Entlüftungsautomat besteht aus einem Gehäuse 1 mit einem vielkantig ausgebildeten Oberteil 19 und einem Entlüftungskanal 20 mit radial zu diesem angeordneten Luftaustrittsöffnungen 6,die in Seitenflächen 15 des Vielkants 16 münden und von einer Schutzkappe 5 überdeckt sind, die das Gehäuseoberteil mit Abstand umschließt,so dass durch den zwischen der Schutzkappe und den Seitenflächen des Vielkants gebildeten Freiraum 13 die Luft ins Freie entweichen kann,sowie aus einem Unterteil 2 mit Außengewinde 21 zum Einschrauben in ein zu überwachendes Flüssigkeitssystem. In einer abgesetzten Innenbohrung,die als Luftsammelraum 22 dient, ist ein auf- und abbeweglicher Stufenkolben 23 mit Radialspiel angeordnet. Das Kolbenoberteil 28 ist mit einer kegelförmigen Stirnfläche ausgebildet, an der ein Dichtring 18 zur Abdichtung des Entlüftungskanals 20 vorgesehen ist. Das Kolbenunterteil 25 hat einen glatten zylindrischen Aussenmantel und weist an seinem Boden Ausnehmungen 25 auf, die den Zutritt der Luft zum Ringraum 27 erleichtern, und stützt sich mit seinem Boden an einer Ringbörtelung 26 des Gehäuseunterteiles ab. Die Feder 24 stützt sich auf der Stirnfläche des Kolbenunterteiles ab und unterstützt die Abwärtsbewegung des Kolbens; es kann außerdem damit bei einer Druckbeaufschlagung eine gewisse Schließzeit des Kolbens in Abhängigkeit der Federstärke festgelegt werden.

**Patentansprüche**

1. Entlüftungsautomat für flüssigkeitsgefüllte Systeme mit einem ein Gewinde (21) tragenden Gehäuseunterteil (2) mit einer Innenbohrung (22) für einen auf- und abbeweglichen Kolben (23), der durch eine Druckfeder (24) beaufschlagt ist, und mit einem eine Zentralbohrung als Entlüftungskanal (20) aufweisenden Gehäuseoberteil (19) , wobei zwischen Kolbenunterteil (25) und Innenbohrung (22) ein Ringraum (27) besteht, und wobei der Kolben (23) als Schliessorgan des Entlüftungskanals (20) ausgebildet und in die und aus der Schliessstellung verschiebbar ist, dadurch gekennzeichnet, dass radial zum Entlüftungskanal (20) Luftaustrittsöffnungen (6) angeordnet sind, die in Seitenflächen (15) eines am Gehäuseoberteil (19) angeordneten Vielkants (16) münden, und dass das Gehäuseoberteil (19) von einer Schutzkappe (5) so abgedeckt ist, dass Luft entweichen kann.

2. Entlüftungsautomat nach Anspruch 1, dadurch gekennzeichnet, dass der Kolben (23) stufenförmig und zylindrisch ausgebildet ist.

3. Entlüftungsautomat nach Anspruch 1 oder 2, dadurch gekennzeichnet, dass der Kolben (23) an seiner kegelförmigen Stirnseite einen Dichtring (18) trägt und an seinem Boden mit Ausnehmungen (25) versehen ist.

4. Entlüftungsautomat nach einem der vorhergehenden Ansprüche,dadurch gekennzeichnet, dass die Schutzkappe (5) das Vieleck (16) so umschliesst und darauf so aufgeschoben ist, dass die Seitenflächen des Vielkants mit der Innenwandung der Schutzkappe (5) Freiräume (13) bilden, durch die die Luft ins Freie entweichen kann.

**Claims**

1. Automatic vent for liquid-filled systems, having a lower housing part (2) carrying a thread (21) and with an inner bore (22) for a piston (23) which can move up and down and is driven by a compression spring (24), and having an upper housing part (19) possessing a central bore as vent duct (20), an annular space (27) being present between the lower piston part (25) and the inner bore (22), and the piston (23) being in the form of a closing organ of the vent duct (20) and made capable of being displaced into and out of the closed position, characterised in that air outlet orifices (6) are arranged radially with respect to the vent duct (20), the said orifices ending in lateral surfaces (15) of a polyhedron (16) arranged in the upper housing part (19), and that the upper housing part (19) is covered by a protective cap (5) in such a way that air can escape.

2. Automatic vent according to Claim 1, characterised in that the piston (23) is stepped and cylindrical.

3. Automatic vent according to Claim 1 or 2, characterised in that the piston (23) carries a sealing ring (18) on its conical end face and is provided with recesses (25) at its bottom.

4. Automatic vent according to any of the preceding Claims, characterised in that the protective cap (5) encloses the polygon (16) in such a way, and is pushed thereon in such a way, that the lateral surfaces of the polyhedron form, together with the inner wall of the protective cap (5), cavities (13) through which the air can escape into the atmosphere.

**Revendications**

1. Dispositif automatique de purge d'air pour des systèmes remplis de liquide, avec une partie inférieure de boîtier (2) portant un filetage (21) et présentant un alésage intérieur (22) pour un piston (23) mobile vers le haut et vers le bas qui est sollicité par un ressort de pression (24), et avec une partie supérieure de boîtier (19) présentant un alésage central comme canal de purge d'air (20), un espace annulaire (27) étant présent entre la partie inférieure (25) du piston et l'alésage intérieur (22), et le piston (23) étant conçu comme obturateur du canal de purge d'air (20) et pouvant être déplacé dans et hors de la position de fermeture, caractérisé en ce que des ouvertures de sortie d'air (6) sont disposées radialement au canal de purge d'air (20), qui débouchent dans des faces latérales (15) d'un polyèdre (16) formé par la partie supérieure de boîtier (19), et en ce que la partie supérieure de boîtier (19) est recouverte par un capot de protection (5) de façon à permettre un échappement d'air.

2. Dispositif automatique de purge d'air selon la revendication 1, caractérisé en ce que le piston (23) est réalisé à gradins et cylindrique.

3. Dispositif automatique de purge d'air selon la revendication 1 ou 2, caractérisé en ce que le piston (23) porte une bague d'étanchéité (18) sur son côté frontal conique et est muni d'évidements (25) sur son fond.

4. Dispositif automatique de purge d'air selon l'une des revendications précédentes, caractérisé en ce que le capot de protection (5) entoure et est enfilé sur le polyèdre (16) de telle sorte que les faces latérales du polyèdre forment avec la paroi intérieure du capot de protection (5) des espaces libres (13) par lesquels l'air peut s'échapper à l'extérieur.

**Fig. 1**

**Fig. 2**